# EUROPÄISCHE PATENTANMELDUNG

(11) **EP 1 705 510 A1**
(43) Veröffentlichungstag der Anmeldung: **27.09.2006**
(21) Anmeldenummer: 06100927.0
(22) Anmeldetag: 27.01.2006
(51) Int. Cl.: G02B 21/24

(54) **Automatisiertes Mikroskop**

(30) Priorität: 22.03.2005 DE 102005013152
(71) Anmelder: Leica Microsystems CMS GmbH, 35578 Wetzlar (DE)
(72) Erfinder: Gilbert, Manfred, 35641, Schöffengraund (DE)
(74) Vertreter: Reichert, Werner Franz

(57) **Zusammenfassung**

Es ist ein automatisiertes Mikroskop (10) mit einem Stativ (1) offenbart. Auf dem Stativ (1) ist ein Frontbedienfeld (40) vorgesehen, das eine Vielzahl von Tasten (41, 42, 43, 44, 45, 46, 47) besitzt. An mindestens einer der Seiten des Stativs (1) sind weitere Tasten (25, 26) vorgesehen, mit denen die Objektive des Mikroskops (10) in die Arbeitsposition verbracht werden.

## Beschreibung

Die Erfindung betrifft ein automatisiertes Mikroskop. Im Besonderen betrifft die Erfindung ein automatisiertes Mikroskop mit einem Stativ.

Die U.S. Patentanmeldung 2004/0190129 offenbart eine Vorrichtung und ein Verfahren zur Kontrolle eines Mikroskopsystems. Das Mikroskop umfasst Stativ, das ein zentrales Display integriert hat. Das Display umfasst ein Menü zum Betreiben des Mikroskops. Um den Betätigungsknopf für die Fokussierung sind mehrere Tasten angeordnet, die mindestens eine Mikroskopfunktion steuern.

Die U.S. Patentanmeldung 2003/0161036 offenbart ein motorisiertes Mikroskop, das eine Vielzahl von elektrisch kontrollierbaren Mikroskopkomponenten umfasst. Die Betätigung von Tasten schaltet dann die entsprechenden Mikroskopkomponenten in den Strahlengang.

Die U.S. Patentanmeldung 2003/0090789 offenbart ein Mikroskop mit einer Vielzahl von Kontrollelementen. Das Mikroskop umfasst eine Vielzahl von elektronisch kontrollierbaren Komponenten. Da die Zahl der Komponenten die Zahl der Kontrollelemente (Tasten) am Mikroskop überschreitet, können entsprechende Mikroskopfunktionen den Tasten zugewiesen werden.

Das U.S.-Patent 6,717,725 offenbart ein automatisiertes Mikroskopsystem.

Neben dem Mikroskop ist eine Box vorgesehen, in der eine Steuer- und Kontrolleinrichtung vorgesehen ist, und von der aus die Energieversorgung an das Mikroskop geliefert wird.

Das U.S.-Patent 6,525,876 offenbart eine Vorrichtung zum Ändern der Objektive eines Mikroskops. Die Objektive sind an einem motorisierten Revolver vorgesehen, so dass der Objektivwechsel automatisch und motorisiert abläuft.

Das U.S.-Patent 6,452,625 offenbart ein kompaktes Video-Mikroskop. Zur Kontrolle des Mikroskops und zur Kommunikation ist das Mikroskop mit einem Mikrophon, einem Lautsprecher und einer Videokamera versehen.

Das U.S. Patent 5,000,555 offenbart ein Mikroskop mit einem Stativ und einem am Stativ vorgesehenen Fokusknopf, wobei im Bereich um den Fokusknopf mehrere Tasten vorgesehen sind. Die Tasten dienen dazu Kommandos an eine im Mikroskop vorgesehene Schaltung einzugeben. Eine Verteilung und Funktionalität der Tasten gemäß der Erfindung sind hier nicht offenbart.

Der Erfindung liegt die Aufgabe zugrunde ein automatisiertes Mikroskop zu schaffen, mit dem die Positionierung von Objektiven in der Arbeitsposition des Mikroskops für den Benutzer erleichtert ist.

Die objektive Aufgabe wird durch ein automatisiertes Mikroskop gelöst, das die Merkmale des Patentanspruchs 1 aufweist.

Die Erfindung hat den Vorteil, dass ein automatisiertes Mikroskop mit einem Stativ vorgesehen ist. An dem Stativ ist ein Frontbedienfeld vorgesehen, das eine Vielzahl von Tasten besitzt. Ferner sind dem Mikroskop mindestens zwei weitere Tasten zugeordnet.

Jeder der Tasten ist eine Anzeige zugeordnet, die anzeigt welche Objektivvergrößerung der jeweiligen Taste zugeordnet ist. Die Anzeige kann ein Klebeschild sein. Die Anzeige kann ebenfalls ein elektronisches Display sein.

Die weiteren Tasten können an der linken oder der rechten Seite des Stativs vorgesehen sein. Ebenso ist es denkbar, dass weitere Tasten an der linken und der rechten Seite des Stativs vorgesehen sind. Die Tasten können auch als linker Fußschalter und als rechter Fußschalter eines Doppel-Fußschalters realisiert sind. Die Tasten am Stativ des Mikroskops und der Fußschalter können auch gemeinsam dem Mikroskop zugeordnet sein.

Über die Tasten an der Seite des Stativs oder die Fußschalter können im Standardmodus nacheinander die Objektivvergrößerungen angefahren werden. Ein Drücken der oberen Taste oder eine Betätigung des rechten Fußschalters haben die gleiche Funktion. Das Drücken der unteren Taste am Stativ oder eine Betätigung des linken Fußschalters haben ebenfalls die gleiche Funktion. Die gleiche Funktion ist eine motorische Drehung des Objektivrevolvers im oder gegen den Uhrzeigersinn.

Ein Togglemodus ist durch Betätigung der Toggletaste aktivierbar. Der Standardmodus ist durch eine erneute Betätigung der Toggletaste aktivierbar, wobei die für den Togglemodus eingelernten Objektive erhalten bleiben.

Durch Drücken und Halten der Toggletaste ist der Lernmodus aktiviert.. Während die Toggletaste gehalten wird, können zwei Vergrößerungen durch Drücken der Tasten Objektivvergrößerung ausgewählt werden. Die im Lernmodus ausgewählten Tasten leuchten in der gleichen Farbe, wobei der Togglemodus aktiviert ist, wenn die Toggletaste losgelassen ist. Die Tasten sind mit mindestens einem Leuchtmittel versehen. Eine aktivierte Taste sendet grünes Licht aus und eine nicht aktivierte Taste sendet gelbes Licht aus.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
Fig. 1 eine Frontansicht eines Mikroskops, das Tasten zum Betätigen der Mikroskopfunktionen umfasst;
Fig. 2 eine Seitenansicht des Mikroskops mit weiteren Tasten, die an der Seite des Stativs angeordnet sind;
Fig. 3 eine Seitenansicht des Mikroskops mit einem Fußschalter zum Betätigen einer definierten Mikroskopfunktion;
Fig. 4 eine Detailansicht des Frontbedienfeldes mit einer Vielzahl von Tasten zur Auswahl einer Objektivvergrößerung
Fig.5 eine Detailansicht des Frontbedienfeldes bei Standardbetrieb;
Fig. 6 eine Detailansicht des Frontbedienfeldes im Togglemodus;
Fig. 7 eine Detailansicht des Frontbedienfeldes im Lernmodus;
Fig. 8 eine Detailansicht des Frontbedienfeldes im Lernmodus für den Togglemodus zum Umschalten zwischen zwei definierten Objektivvergrößerungen; und
Fig.9 eine Detailansicht des Frontbedienfeldes, bei der der Lernmodus beendet ist.

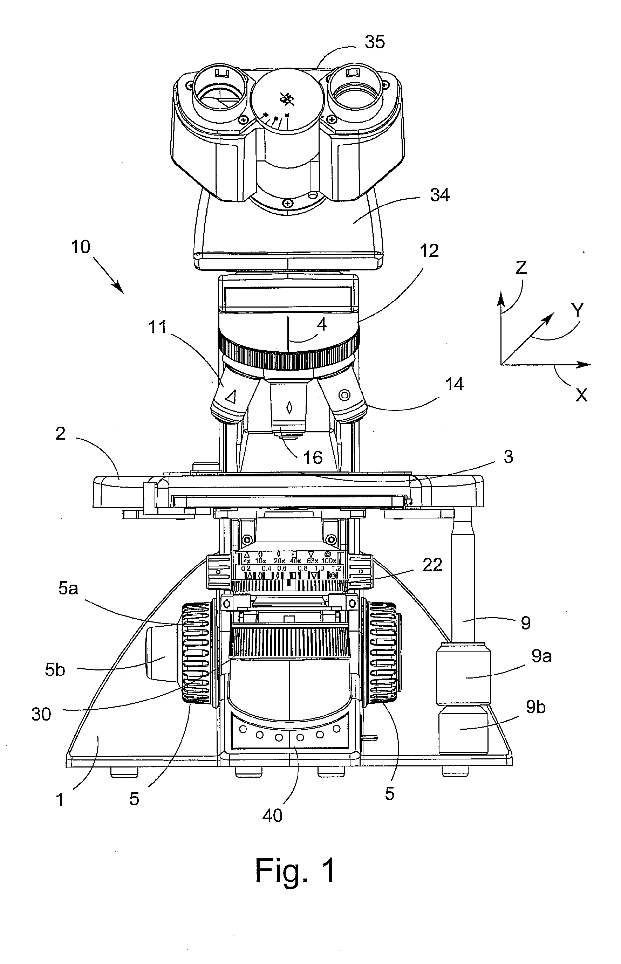

Fig. 1 zeigt eine Frontansicht des Mikroskops 10, bei dem ein Ausführungsbeispiel der erfindungsgemäßen Lehre verwirklicht ist. Das Mikroskop 10 umfasst ein Stativ 1, an dem ein Mikroskoptisch 2 angebracht ist. Unter dem Mikroskoptisch 2 ist ein Kondensor 30 vorgesehen. Gegenüber dem Kondensor 30 ist am Stativ ein Revolver 12 am Stativ 1 angebracht. Der Revolver 12 trägt mehrere Objektive 11, 14, 16, die vom Benutzer initiiert, motorisch in eine Arbeitsposition 4 verbracht werden können. Die Arbeitsposition ist diejenige Stellung eines Objektivs 11, 14, 16, mit dem ein Benutzer eine mikroskopische Untersuchung einer auf dem Mikroskoptisch 2 befindlichen Probe 3 durchführt. In der in Fig. 1 gezeigten Einstellung befindet sich das Objektiv 16 in der Arbeitsposition.

Der Mikroskoptisch 2 ist mit einem Verstellelement 9 versehen, mit dem der Mikroskoptisch 2 in einer X-Richtung und einer Y-Richtung verschoben werden kann. Hierzu besitzt das Verstellelement 9 ein X-Verstellelement 9a und ein Y-Verstellelement 9b. Ebenso umfasst das Mikroskop 10 eine Verstelleinrichtung 5 für die Z-Richtung, mit der der Mikroskoptisch 2 in der Z-Richtung verfahren wird. Die Verstelleinrichtung umfasst mindestens ein erstes und ein zweites Betätigungselement 5a und 5b, von denen jedes einen Fein- und einen Grobfokus umfasst.

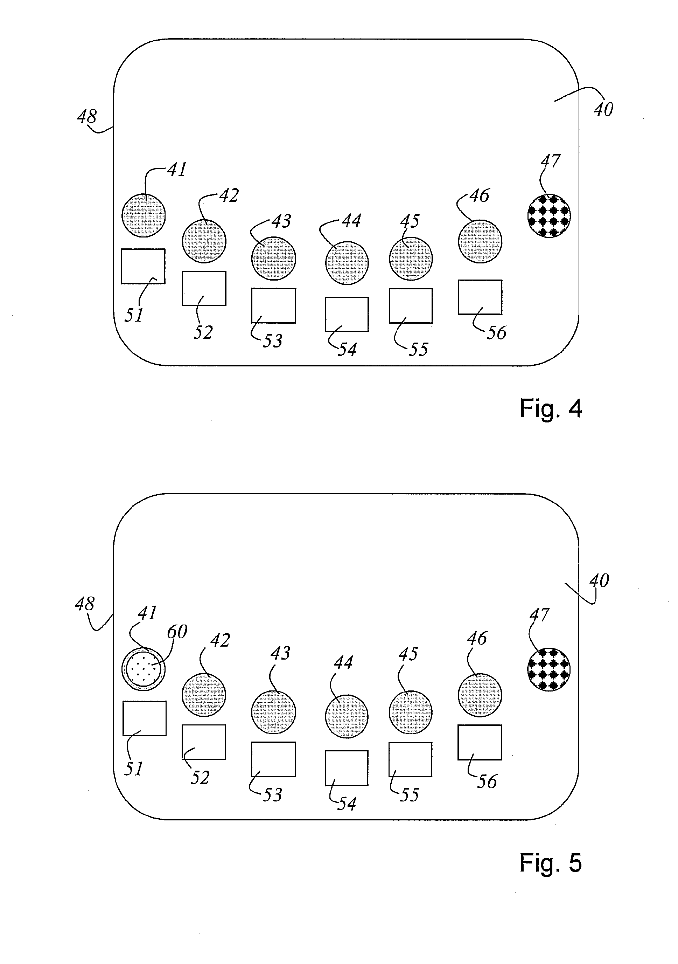

Der Kondensor 30 ist mit mindesten einem verstellbaren Blendeneinstellring 22 versehen. Der Kondensor 30 kann ebenfalls motorisiert sein, so dass die Einstellung der Blende am Kondensor 30 zu der ausgewählten Vergrößerung des Objektivs passt.. Ferner trägt das Mikroskop 10 noch einen Tubus 34, der mit einem Binokular 35 versehen ist, durch das das Abbild der Probe betrachtet werden kann. Am Stativ ist ein Frontbedienfeld 40 vorgesehen, das eine Vielzahl von Tasten (siehe Fig. 4) zur Auswahl einer Objektivvergrößerung trägt.

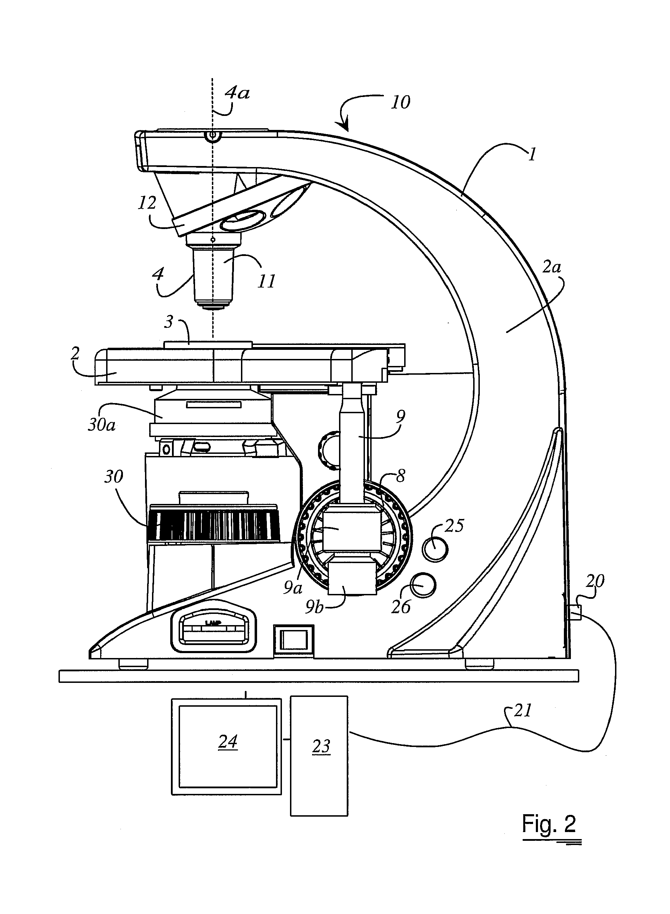

Fig. 2 zeigt eine Seitenansicht Mikroskops 10 mit weiteren Tasten 25 und 26, die an der Seite 2a des Stativs 1 angeordnet sind. Die Tasten 25 und 26 können ebenfalls auf beiden Seiten des Stativs 1 angebracht sein. Die obere Taste 25 und die untere Taste 26 sind um ein Antriebselement 8 angeordnet. Beim motorisierten Kondensor 30 wird bei Objektivvergrößerungen von kleiner 10-fach der Kondensorkopf 30a automatisch ausgeschwenkt. Bei Objektivvergrößerungen von gleich oder größer 10-fach wird der Kondensorkopf 30a eingeschwenkt. Ebenso ist in Fig. 2 eine weitere Ausführungsform des Stativs 1 dargestellt. Das Stativ 1 umfasst in dieser Ausführungsform eine USB-Schnittstelle 20, die über ein Datenkabel 21 mit einem PC 23 verbunden ist. Alle Mikroskopfunktionen sind somit über den PC 23 steuerbar. Folglich können auch die am Stativ vorgesehenen Tasten 25,26, 41, 42, 43, 44, 45, 46, 47 in der gewünschten Weise vom PC 23 aus belegt werden. Ein dem PC 23 zugeordnetes Display 24 gibt zur Tastenbelegung eine graphische Unterstützung. So werden z.B. die auf dem Stativ 1 vorgesehen Tasten auf dem Display 24 dargestellt und der Benutzer hat dann z,B. mit einem Eingabeelement die zu belegende Taste auswählen.

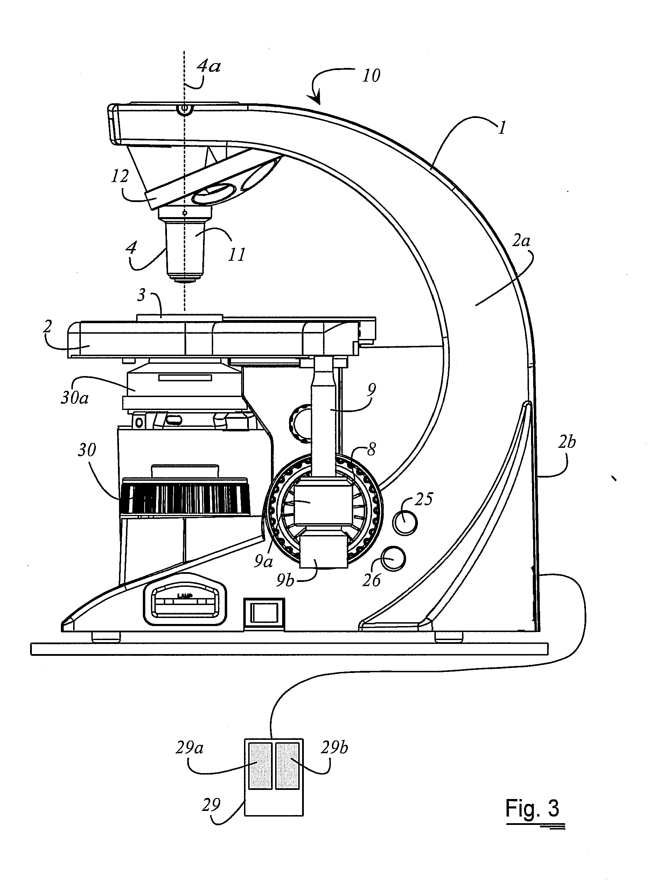

Fig. 3 zeigt eine Seitenansicht des Mikroskops 10 mit einem Doppel-Fußschalter 29 zum Betätigen einer definierten Mikroskopfunktion. Die Funktion der oberen Taste 25 kann ebenfalls mit einem rechten Fußschalter 29a realisiert werden und die Funktion der unteren Taste 26 kann ebenfalls mit einem linken Fußschalter 29b des Doppel-Fußschalters 29 realisiert werden. Der Anschluss für den Doppel-Fußschalter 29 kann sich an einer Rückseite 2b des Stativs 1 befinden.

Fig. 4 eine Detailansicht des Frontbedienfeldes 40 mit einer Vielzahl von Tasten 41, 42, 43, 44, 45, 46, 47 zur Auswahl einer Objektivvergrößerung. In der hier dargestellten Ausführungsform sind sechs Tasten 41, 42, 43, 44, 45, 46 zur direkten Anwahl eines Objektivs vorgesehen. Die Zuordnung der einzelnen Tasten zu 41, 42, 43, 44, 45, 46 zu den Objektiven kann dem Benutzer über entsprechende Anzeigen 51, 52, 53, 54, 55, 56 vermittelt werden. Die Anzeige 51, 52, 53, 54, 55 oder 56 zeigt an welche Vergrößerung mit der jeweiligen Taste 41, 42, 43, 44, 45 oder 46 in die Arbeitsposition des Mikroskops 10 motorisch verfahren wird. Die Anzeige 51, 52, 53, 54, 55 oder 56 kann z.B. als elektronisches Display oder als Klebeschild ausgestaltet sein. Die Belegung der einzelnen Tasten 41, 42, 43, 44, 45, 46 wird in der Regel derart gewählt, dass mit der ersten Taste 41 das Objektiv mit der kleinsten Vergrößerung in die Arbeitsposition verschwenkt werden kann. Die Taste 41 für die kleinste Vergrößerung befindet sich somit zum linken Rand 48 des Frontbedienfeldes 40 hin. Die Zuordnung der Tasten 41, 42, 43, 44, 45, 46 zum jeweiligen Objektiv erfolgt werksseitig oder kann auch vom Benutzer durchgeführt werden und ist unabhängig von der Mikroskopausrüstung. Zum rechten Rand 49 des Frontbedienfeldes 40 hin ist die Taste 47 vorgesehen, die als Toggletaste dient. Die Toggletaste dient zum Umschalten des Modus des Frontbedienfeldes 40. In Standardmodus werden die beiden Tasten 25 und 26 an der rechten bzw. linken Seite 2a des Stativs 1 benutzt nacheinander die Objektivvergrößerungen anzufahren. Ein Drücken der oberen Taste 25 bewirkt eine motorische Drehung des Objektivrevolvers 12 im Uhrzeigersinn. Ein Drücken der unteren Taste 26 bewirkt eine motorische Drehung des Objektivrevolvers 12 entgegen dem Uhrzeigersinn. Die Belegung der Tasten 25 und 26 ist in der Standardkonfiguration auf der rechten und der linken Seite 2a des Stativs 1 identisch. Ist der Togglemodus angewählt, dann wird beim Drücken der seitlichen Tasten 25 und 26 zwischen zwei zuvor eingelernten Vergrößerungen hin- und hergeschaltet. Die werksseitig vordefinierten Objektive können im Lernmodus leicht benutzerspezifisch verändert werden. Im Frontbedienfeld 40 sind farbliche Dioden oder Leuchten in den Tasten 41, 42, 43, 44, 45, 46, 47 integriert, die das in der Arbeitsposition befindliche Objektiv bzw. den aktuellen Modus anzeigen.

Fig. 5 zeigt eine Detailansicht des Frontbedienfeldes 40 bei Standardbetrieb. Die Taste 47 (Toggletaste) ist aus. Die Toggletaste ist entweder nicht bestromt oder die Diode leuchtet nicht und zeigt somit die Nicht-Funktion der Taste 47 an. Die Taste 41 für das aktuelle Objektiv leuchtet, da die darin eingebaute Leuchte 60 oder Diode aktiviert ist. Mit den Tasten 25 und 26 an der Seite des Stativs 1 können nacheinander die Objektive in die Arbeitsposition geschwenkt werden. Wird z.B. eine der Tasten 25 und 26 an der Seite des Stativs 1 zweimal nacheinander gedrückt, wird ein Objektiv übersprungen und direkt das darauffolgende Objektiv in die Arbeitsposition geschwenkt. Die diesem Objektiv zugeordnete Taste leuchtet nun. Die in der Taste vorgesehene Leuchte 60 oder Diode ist aktiviert. In der bevorzugten Ausführungsform geben die in den Tasten 41, 42, 43, 44, 45, 46 vorgesehenen Dioden grünes Licht ab.

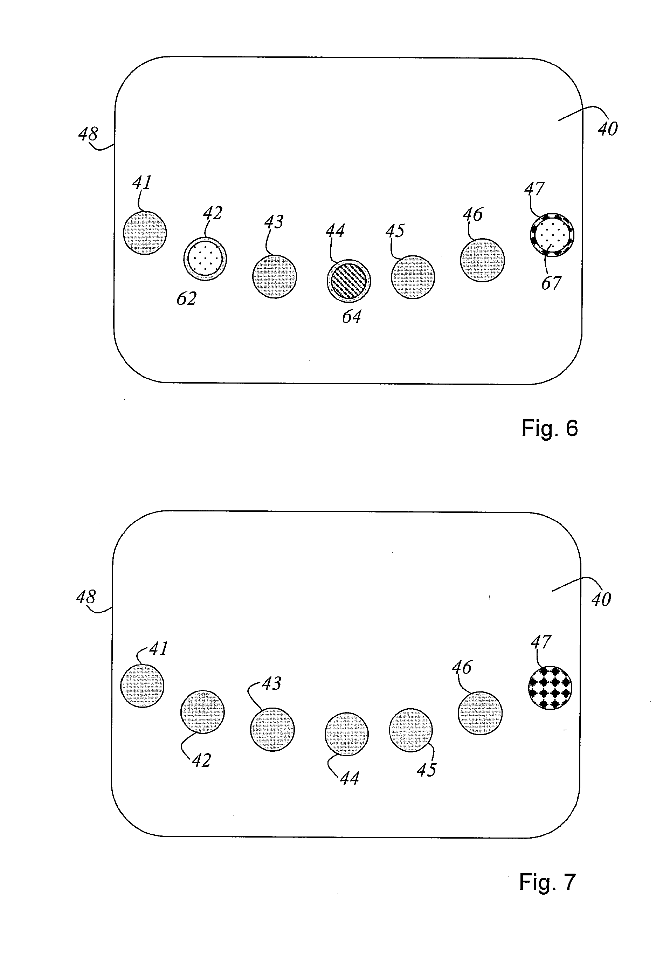

Fig. 6 zeigt eine Detailansicht des Frontbedienfeldes 40 im Togglemodus. Ausgehend vom Standardmodus (Fig. 5) wird durch einen kurzen Druck auf die Taste 47 (Toggletaste) zum Togglemodus umgeschaltet. Entsprechend wird die in der Taste 47 vorgesehene Leuchte 67 Diode aktiviert. Bevorzugt gibt diese Diode 67 ebenfalls grünes Licht ab. Die kleinere der zuvor eingelernten Vergrößerungen wird eingestellt und die zugehörige Taste 42 leuchtet. Die Leuchte 62 oder Diode gibt bevorzugt grünes Licht ab. Die Taste 44 des zweiten eingelernten Objektivs leuchtet in einer anderen Farbe als die Taste 44. Die Leuchte 64 oder Diode gibt bevorzugt gelbes Licht ab. Mit den beiden Tasten 25 und 26 an der rechten bzw. linken Seite des Stativs 1 kann zwischen diesen beiden Objektiven hin- und hergeschaltet werden. Dabei ist es gleich, welche der seitlichen Tasten 25 oder 26 gedrückt wird. Beim Wechsel des Objektivs wechselt auch die Farbanzeige, so dass immer die Taste des aktuellen Objektivs grün und die des anderen Objektivs gelb leuchtet. Durch ein erneutes Drücken der Taste 47 (Toggletaste) wechselt man wieder in den Standardmodus. Ebenso wird in den Standardmodus gewechselt, wenn eine der Taste 41, 42, 43, 44, 45 oder 46 gedrückt wird. Das durch den Benutzer ausgewählte Objektiv wird in die Arbeitsposition verfahren und die für den Togglemodus eingelernten Objektive bleiben erhalten.

Fig. 7 zeigt eine Detailansicht des Frontbedienfeldes 40 im Lernmodus. Wenn der Benutzer die Taste 47 (Toggletaste) gedrückt hält, dann erlöschen alle bisher beleuchteten Tasten. Die für den Togglemodus gewünschten Objektive müssen bei gedrückter Taste 47 (Toggletaste) durch Drücken ausgewählt werden.

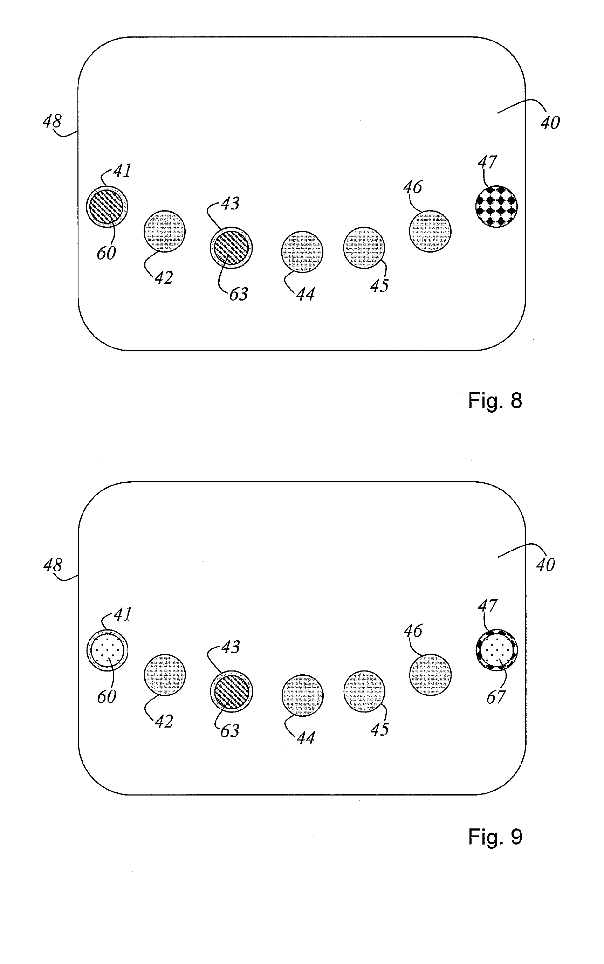

Fig. 8 zeigt eine Detailansicht des Frontbedienfeldes 40 im Lernmodus für den Togglemodus zum Umschalten zwischen zwei definierten Objektivvergrößerungen. Die im Lernmodus ausgewählten Tasten 41 und 43 leuchten nun in der gleichen Farbe. Die in den Tasten 41 und 43 vorgesehenen Leuchten 60 und 63 geben Licht der gleichen Farbe ab. In der bevorzugten Ausführungsform geben die den Tasten 41 und 43 zugeordneten Leuchten 60 und 63 oder Dioden gelbes Licht ab. Wenn dann die Taste 47 (Toggletaste) losgelassen wird, ist der Togglemodus aktiviert.

Fig. 9 zeigt eine Detailansicht des Frontbedienfeldes 40, bei der der Lernmodus beendet ist. Nach dem Loslassen der Taste 47 (Toggletaste) leuchtet die Taste 41 für das Objektiv mit der kleineren Vergrößerung grün. Ferner wird das Objektiv mit der kleineren Vergrößerung angefahren. Die Taste 43 leuchtet für das weitere in Togglemodus verwendete Objektiv gelb. Diese Einstellungen bleiben so lange erhalten bis der Lernmodus erneut gewählt und aktiviert wird.

Wie bereits in Fig. 3 beschrieben, kann das Einschwenken der Objektive optional ebenfalls mit einem Doppel-Fußschalter erfolgen, der an das Stativ 1 angeschlossen ist. Der Anschluss für den Doppel-Fußschalter 29 kann sich an der Rückseite des Stativs 1 befinden. Der linke Fußschalter 29a hat die gleiche Funktion wie die untere Taste 26 am Stativ 1. Der rechte Fußschalter 29b hat die gleiche Funktion wie die obere Taste 25 am Stativ 1.

Ebenso sind Sonderfunktionen der seitlichen Tasten 25 und 26 möglich. Beim motorisierten Kondensor 30 wird bei Objektivvergrößerungen von kleiner 10-fach der Kondensorkopf 30a automatisch ausgeschwenkt. Bei Objektivvergrößerungen von größer oder gleich 10-fach wird der Kondensorkopf eingeschwenkt. Für spezielle Anwendungen kann das Aus-und Einschwenken des Kondensorkopfes auf die rechten oder linken Tasten 25 und 26 des Stativs 1 gelegt werden. Somit kann die Position des Kondensorkopfes vom Benutzer eingestellt werden. Eine Veränderung der Belegung der Tasten ist nur über die Software Leica DMControl möglich und erfordert den Anschluss eines PCs.

## Patentansprüche

1. Automatisiertes Mikroskop (10) mit einem Stativ (1), **dadurch gekennzeichnet, dass** an dem Stativ (1) ein Frontbedienfeld (40) vorgesehen ist, das eine Vielzahl von Tasten (41, 42, 43, 44, 45, 46, 47) besitzt, und dass dem Mikroskop (10) mindestens zwei weitere Tasten (25, 26, 29a, 29b) zugeordnet sind.

2. Automatisiertes Mikroskop (10) nach Anspruch 1, wobei jeder der Tasten (41, 42, 43, 44, 45, 46) eine Anzeige (51, 52, 53, 54, 55, 56) zugeordnet ist, die anzeigt welche Objektivvergrößerung der jeweiligen Taste (41, 42, 43, 44, 45, 46) zugeordnet ist.

3. Automatisiertes Mikroskop (10) nach Anspruch 2, wobei die Anzeige (51, 52, 53, 54, 55, 56) ein Klebeschild ist.

4. Automatisiertes Mikroskop (10) nach Anspruch 2, wobei die Anzeige (51, 52, 53, 54, 55, 56) ein elektronisches Display ist.

5. Automatisiertes Mikroskop (10) nach Anspruch 1, wobei an der linken oder der rechten Seite des Stativs (1) Tasten (25, 26) vorgesehen sind.

6. Automatisiertes Mikroskop (10) nach Anspruch 1, wobei an der linken und der rechten Seite des Stativs (1) Tasten (25, 26) vorgesehen sind.

7. Automatisiertes Mikroskop (10) nach Anspruch 1, wobei die Tasten (25, 26) als linker Fußschalter (29a) und als rechter Fußschalter (29b) realisiert sind.

8. Automatisiertes Mikroskop (10) nach Anspruch 1, wobei zusätzlich zu den Tasten (25, 26) ein linker Fußschalter (29a) und ein rechter Fußschalter (29b) auf dem Doppel-Fußschalters (29) vorgesehen sind, und dass der linke Fußschalter (29a) und der rechte Fußschalter (29b) die Funktion der Tasten (25, 26) realisiert.

9. Automatisiertes Mikroskop (10) nach einem der Ansprüche 1 bis 8, wobei über die Tasten (25, 26) des Stativs (1) im Standardmodus nacheinander die Objektivvergrößerungen anfahrbar sind.

10. Automatisiertes Mikroskop (10) nach Anspruch 1, wobei ein Drücken der oberen Taste (25) oder eine Betätigung des rechten Fußschalters (29b) die gleiche Funktion haben, und dass ein Drücken der unteren Taste (26) oder eine Betätigung des linken Fußschalters (29a) eine gleiche Funktion haben.

11. Automatisiertes Mikroskop (10) nach Anspruch 10, wobei die gleiche Funktion eine motorische Drehung des Objektivrevolvers im Uhrzeigersinn ist.

12. Automatisiertes Mikroskop (10) nach Anspruch 10, wobei die gleiche Funktion eine motorische Drehung des Objektivrevolvers gegen den Uhrzeigersinn ist.

13. Automatisiertes Mikroskop (10) nach einem der Ansprüche 1 bis 12, wobei ein Togglemodus durch eine kurze Betätigung der Taste (47) aktivierbar ist.

14. Automatisiertes Mikroskop (10) nach Anspruch 13, wobei der Standardmodus durch eine erneute Betätigung der Taste (47) aktivierbar ist, so dass die für den Togglemodus eingelernten Objektive erhalten bleiben.

15. Automatisiertes Mikroskop (10) nach einem der Ansprüche 1 bis 14, wobei ein Lernmodus durch langes Drücken der Taste (47) aktivierbar ist.

16. Automatisiertes Mikroskop (10) nach Anspruch 15, wobei die im Lernmodus ausgewählten Tasten (41 und 43) in der gleichen Farbe leuchten und dass der Togglemodus aktiviert ist wenn die Taste (47) losgelassen ist.

17. Automatisiertes Mikroskop (10) nach einem der Ansprüche 1 bis 16, wobei die Tasten (41, 42, 43, 44, 45, 46, 47) mit mindestens einem Leuchtmittel versehen ist, und dass die Leuchtmittel erst bei betätigter Taste leuchten.

18. Automatisiertes Mikroskop (10) nach Anspruch 17, wobei das Leuchtmittel bei aktivierter Taste grünes Licht aussendet.

19. Automatisiertes Mikroskop (10) nach Anspruch 17, wobei das Leuchtmittel bei nicht aktivierter Taste gelbes Licht aussendet.

20. Automatisiertes Mikroskop (10) nach Anspruch 17, wobei das Leichtmittel eine Diode ist.

21. Automatisiertes Mikroskop (10) nach einem der Ansprüche 1 bis 20, wobei das Stativ (1) eine USB-Schnittstelle (20) besitzt, und dass die Tasten (25, 26, 41, 42, 43, 44, 45, 46, 47) am Stativ (1) in der gewünschten Weise vom PC 23 aus belegbar sind.
